(19) **Europäisches Patentamt**
**European Patent Office**
**Office européen des brevets**

(11) **EP 2 171 480 B1**

(12) **EUROPÄISCHE PATENTSCHRIFT**

(45) Veröffentlichungstag und Bekanntmachung des Hinweises auf die Patenterteilung:
**18.04.2012 Patentblatt 2012/16**

(21) Anmeldenummer: **08760377.5**

(22) Anmeldetag: **02.06.2008**

(51) Int Cl.:
**G01P 13/04** *(2006.01)*    **B60W 40/10** *(2012.01)*
**G01P 3/481** *(2006.01)*

(86) Internationale Anmeldenummer:
**PCT/EP2008/056791**

(87) Internationale Veröffentlichungsnummer:
**WO 2009/003777 (08.01.2009 Gazette 2009/02)**

(54) **VERFAHREN ZUR FAHRTRICHTUNGSERKENNUNG EINES KRAFTFAHRZEUGS**

METHOD FOR DETECTING THE DIRECTION OF TRAVEL OF A MOTOR VEHICLE

PROCÉDÉ DE DÉTECTION DU SENS DE DÉPLACEMENT D'UN VÉHICULE AUTOMOBILE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.06.2007 DE 102007030431**

(43) Veröffentlichungstag der Anmeldung:
**07.04.2010 Patentblatt 2010/14**

(73) Patentinhaber: **Continental Teves AG & Co. OHG 60488 Frankfurt (DE)**

(72) Erfinder:
• **FISCHER, Daniel 65824 Schwalbach (DE)**
• **GRIESSER, Martin 65760 Eschborn (DE)**
• **IRTH, Markus 55252 Mainz-Kastel (DE)**
• **SCHREINER, Frank 61381 Friedrichsdorf (DE)**
• **SUSSMANN, Christian 65812 Bad Soden (DE)**
• **KÖBE, Andreas 64625 Bensheim (DE)**

(56) Entgegenhaltungen:
**WO-A-02/062640    WO-A-2008/009377
DE-A1- 4 038 284    FR-A- 2 893 141
GB-A- 2 317 427    US-A1- 2003 208 310**

**Beschreibung**

Die Erfindung betrifft ein Verfahren gemäß Oberbegriff von Anspruch 1 sowie ein Computerprogrammprodukt zur Durchführung aller Schritte des Verfahrens.

Druckschrift DE 40 38 284 A1 beschreibt ein Verfahren zur Ermittlung der Drehrichtung eines Encoders, bei welchem der Encoder mit unterschiedlichen Maßstabsteilungen, nämlich einerseits großen und andererseits kleinen Maßstabsteilungen, codiert ist. Die Drehbewegungen des Encoders werden von einem Sensor erfasst. Im Zuge einer Drehbewegung des Encoders wird aus dem Signalmuster des Sensors, welches mit dem Maßstabsmuster des Encoders korreliert, bzw. dem zeitlichen Verlauf der Sensorsignale die Drehrichtung des Encoders ermittelt. Solch eine Codierung des Encoders ist insofern nachteilig, als dass zur Berechnung der Drehzahl des Encoders im Wesentlichen ganzzahlige Vielfache einer Umdrehung des Encoders herangezogen werden müssen, wodurch eine Drehzahlmessung mit einem solchen Encoder eine relativ schlechte Auflösung bietet.

In Druckschrift DE 197 21 488 A1 wird ein Verfahren zum Ausgleich von Ungenauigkeiten eines Raddrehzahlsensors vorgeschlagen, im dem jeder Maßstabsteilung ein Korrekturfaktor zugeordnet wird, welcher wenigstens von dem Maßstabsteilungsfehler abhängig ist. Dieser Korrekturfaktor wird bei der Drehzahlberechnung berücksichtigt.

Die Druckschrift DE 41 04 902 A1 beschreibt ein Verfahren zum Erkennen einer Drehrichtung, bei welchem aus den Ausgangssignalen von zwei zueinander, gegenüber einem alternierend magnetisierten Encoder versetzt angeordneten Magnetfeldsensorelementen einerseits ein Summensignal und andererseits ein Differenzsignal gebildet werden und aus diesen Signalen die Drehrichtung des Encoders bestimmt wird.

Druckschrift FR 2 893 141 A1 ist als nächstliegender Stand der technik zu sehen und offenbart ein System zur Detektion einer Bewegungsrichtungsänderung eines Automobils, wobei das Automobil mindestens zwei Raddrehzahlsensoranordnungen umfasst, die jeweils einen Encoder mit einem inkrementellen Maßstab und mehreren Maßstabsteilungen sowie einen Raddrehzahlsensor aufweisen und mit einer elektronischen Kontrolleinheit verbunden sind. Die Raddrehzahlsensoren übertragen bei Erfassung einer Maßstabsteilung jeweils ein Drehzahlsignal an die elektronische Kontrolleinheit, wonach aus dem zeitlichen Auftreten der Drehzahlsignale bezüglich der einzelnen Raddrehzahlsensoranordnungen ein Fahrtrichtungswechsel bestimmt wird.

Die Aufgabe der vorliegenden Erfindung besteht darin, ein Verfahren zur Fahrtrichtungserkennung eines Kraftfahrzeugs vorzuschlagen, wobei insbesondere einfache Low-Cost-Raddrehzahlsensoranordnungen verwendet werden können und/oder eine Fahrtrichtungserkennung bei einer relativ geringen Fahrzeuggeschwindigkeit durchgeführt werden kann. Bevorzugt ist es die Aufgabe der Erfindung, ein Verfahren vorzuschlagen, welches die Fahrtrichtung eines Kraftfahrzeugs im Wesentlichen direkt nach einem Aktivieren der Zündung und nach einer geringen Fahrtstrecke ermitteln kann.

Diese Aufgabe wird erfindungsgemäß gelöst durch das Verfahren gemäß Anspruch 1.

Der Erfindung liegt der Gedanke zu Grunde, aus der Reihenfolge des Auftretens eines Drehzahlsignals bezüglich der einzelnen Raddrehzahlsensoranordnungen eines Kraftfahrzeugs die Fahrtrichtung und/oder einen Fahrtrichtungswechsel zu ermitteln.

Der Grundgedanke der Erfindung kann bevorzugt auch folgendermaßen beschrieben werden:

Die Maßstabsteilungen der Encoder der einzelnen Raddrehzahlsensoranordnungen des Kraftfahrzeugs werden jeweils von einem Raddrehzahlsensor erfasst. Dabei ist die jeweilige konkrete, relative Drehausrichtung zwischen Encoder und Raddrehzahlsensor jeweils pro Raddrehzahlsensoranordnung unterschiedlich. Im Fahrtbetrieb weisen die Raddrehzahlsensoranordnungen jeweils einen unterschiedlichen Verdrehwinkel zwischen dem Raddrehzahlsensor und der nächsten beziehungsweise benachbarten, zu erfassenden Maßstabsteilung auf. Das Muster dieser unterschiedlichen Encoderstellungen zum jeweiligen Raddrehzahlsensor wird im Wesentlichen durch die Reihenfolge des Auftretens der Drehzahlsignale bezüglich der einzelnen Raddrehzahlsensoranordnungen abgebildet. Dem entsprechend schlägt das erfindungsgemäße Verfahren zweckmäßigerweise vor, aus dieser Reihenfolge die Fahrtrichtung oder einen Fahrtrichtungswechsel des Kraftfahrzeugs zu ermitteln.

Das erfindungsgemäße Verfahren hat den Vorteil, dass die Encoder insbesondere nicht speziell für eine Drehrichtungserkennung codiert sein müssen, sondern dass zweckmäßigerweise handelsübliche Encoder mit einem inkrementellen Winkelmaßstab verwendet werden können. Zusätzlich benötigt der Raddrehzahlsensor vorzugsweise nur ein Sensorelement und keine zusätzliche Signalverarbeitungseinheit zur Drehrichtungserkennung, da das Verfahren zweckmäßigerweise als reine Softwarelösung verwendet wird, welche lediglich mindestens zwei inkrementell messende Low-Cost-Raddrehzahlsensoren benötigt. Das Verfahren ist insbesondere zur Fahrtrichtungserkennung bei niedrigen Geschwindigkeiten und geringen, für die Fahrtrichtungserkennung relevanten, Wegstrecken geeignet.

Unter einem Drehzahlsignal wird zweckmäßigerweise ein zeitlich begrenztes Signal verstanden, welches einer durch den Sensor erfassten Maßstabsteilung zugeordnet ist, und insbesondere eine Drehzahlinformation umfasst, besonderes bevorzugt ist die Drehzahlinformation durch die Dauer des Drehzahlsignals codiert. Ganz besonders bevorzugt weist das Drehzahlsignal zumindest einen Drehzahlimpuls auf, dessen Dauer von der Drehzahl beziehungsweise der Drehgeschwindigkeit abhängig ist.

Unter dem Begriff Fahrtrichtungsbestimmung bzw. unter der Bestimmung der Fahrtrichtung wird bevorzugt implizit auch die Erkennung eines möglichen Fahrtrichtungswechsels verstanden.

Der Raddrehzahlsensor ist vorzugsweise ein aktiver Sensor, der seine Energie insbesondere über seine Verbindungsleitungen zur elektronischen Kontrolleinheit bezieht.

Es ist zweckmäßig, dass der Raddrehzahlsensor mindestens ein Sensorelement und eine Signalverarbeitungsschaltung aufweist. Das Sensorelement ist bevorzugt ein magnetoelektrisches Wandlerelement, wie ein AMR-Element, ein GMR-Element, ein anderes magnetoresistives Sensorelement oder ein Hallelement.

Unter einem Encoder wird bevorzugt ein Maschinenelement verstanden, dass einen inkrementellen Winkelmaßstab trägt. Als Encoder können sowohl, insbesondere ferromagnetische, Zahnräder oder Lochscheiben dienen, die in Kombination mit einem Permanentmagneten einen veränderlichen magnetischen Luftspalt erzeugen, zum anderen können es eine ganzzahlige Folge permanent magnetisierter Nord-/Südpolareale sein, die in alternierender Folge eine, besonders bevorzugt zum Kreis geschlossene, Encoderspur bilden, welche beispielsweise in eine Radlagerdichtung eingebracht ist. Der Encoder dient ganz besonders bevorzugt als Impulsgeber innerhalb der Raddrehzahlsensoranordnung.

Es ist zweckmäßig, dass aus einer Information bezüglich der zeitlichen Reihenfolge des aufeinander folgenden Auftretens der Drehzahlsignale der einzelnen Raddrehzahlsensoranordnungen ein Sequenz-Datensatz erzeugt wird. Dieser umfasst insbesondere Zeitstempeldaten, welche jeweils einem zeitlichen Auftreten eines Drehzahlsignals einer Raddrehzahlsensoranordnung zugeordnet sind. Aus den Zeitstempeldaten ist die zeitliche Reihenfolge des Auftretens der Drehzahlsignale besonders einfach und präzise zu gewinnen. Außerdem ermöglicht dieses Datenformat eine ebensolche Weiterverarbeitung der Daten.

Der zuletzt erzeugte Sequenz-Datensatz wird vorzugsweise zu definierten Zeitpunkten und/oder ständig in der elektronischen Kontrolleinheit gespeichert.

Bei der Ermittlung der Fahrtrichtung oder eines Fahrtrichtungswechsels wird der letzte erzeugte beziehungsweise der aktuelle Datensatz bevorzugt mit zumindest einem Vorgänger-Sequenz-Datensatz verglichen. Aus diesem Vergleich, insbesondere bei Vorliegen der zusätzlichen Information welcher Fahrtrichtung dieser Vorgänger-Sequenz-Datensatz zugeordnet ist, lässt sich die Fahrtrichtung relativ präzise ermitteln. Diese zusätzliche Information wird insbesondere zusätzlich in jedem Sequenz-Datensatz nach der FahrtrichtungsErmittlung gespeichert.

Es ist bevorzugt, dass im Zuge einer Fahrtrichtungsermittlung folgende Schritte durchgeführt werden:

- ein aktueller Sequenz-Datensatz wird aus den zuletzt in der elektronischen Kontrolleinheit empfangenen Drehzahlsignalen erzeugt,
- aus wenigstens einem in der elektronischen Kontrolleinheit gespeicherten Vorgänger-Sequenz-Datensatz werden zumindest ein Vorwärts-Sequenz-Datensatz, in dem die Daten entsprechend einer Vorwärtsfahrt angeordnet sind, und zumindest ein Rückwärts-Sequenz-Datensatz, in dem die Daten entsprechend einer Rückwärtsfahrt angeordnet sind, erzeugt,
- wonach der aktuelle Sequenz-Datensatz sowohl mit dem zumindest einen Vorwärts-Sequenz-Datensatz als auch mit dem wenigstens einen Rückwärts-Sequenz-Datensatz verglichen wird, wobei jeweils eine Übereinstimmungs-Kenngröße des aktuellen Sequenz-Datensatzes mit dem zumindest einen Vorwärts-Sequenz-Datensatz und dem wenigstens einen Rückwärts-Sequenz-Datensatz berechnet wird und
- anschließend eine Fahrtrichtungsbestimmung mittels Auswertung zumindest dieser beiden Übereinstimmungs-Kenngrößen durchgeführt wird. Insbesondere wird anschließend der aktuelle Sequenz-Datensatz in der elektronischen Kontrolleinheit gespeichert. Besonders bevorzugt wird die diesem zugeordnete, zuletzt bestimmte Fahrtrichtungsinformation in diesem Sequenz-Datensatz mit abgespeichert. Die Übereinstimmungs-Kenngrößen werden dabei ganz besonders bevorzugt jeweils mittels einer Korrelationsberechnung zwischen dem aktuellen Sequenz-Datensatz und dem Vorwärts-/ Rückwärts-Sequenz-Datensatz berechnet.

Bei der Bestimmung der Fahrtrichtung wird zumindest eine der folgenden Zusatzinformationen berücksichtigt:

Die Fahrzeuggeschwindigkeit, wobei insbesondere die Information, dass eine definierte Mindestgeschwindigkeit vorliegt, zumindest als Indiz für eine Vorwärtsfahrt gewertet wird, eine Getriebeinformation, insbesondere die Information, ob ein Vorwärts- oder ein Rückwärtsgang eingelegt ist, eine Fahrzeugbeleuchtungsinformation, insbesondere die Information, ob die Rückwärtsleuchte brennt, eine Gierrateninformation, eine Querbeschleunigungsinformation und/oder eine Lenkwinkelinformation. Hierdurch kann die Zuverlässigkeit des Verfahrens gesteigert werden und es kann die Plausibilität der ermittelten Fahrtrichtung eingeschätzt werden.

Es ist zweckmäßig, dass zusätzlich mehreren dieser Maßstabsteilungen des Encoders mindestens einer Raddrehzahlsensoranordnung durch Auswertung der Drehzahlsignale des Sensors in einer elektronischen Kontrolleinheit jeweils eine Maßstabsteilungsfehler-Kenngröße zugeordnet wird, wobei aus der Reihenfolge der den erfassten Maßstabsteilungen zugeordneten Maßstabsteilungsfehler-Kenngrößen die Drehrichtung des zumindest einen Encoders ermittelt wird, wonach zumindest diese Drehrichtung des mindestens einen Encoders bei der Bestimmung der Fahrtrichtung des Kraftfahrzeugs berücksichtigt wird. Durch diese im Wesentlichen redundante Fahrtrichtungserkennung wird die Zuverlässigkeit des gesamten Verfahrens erheblich gesteigert. Insbesondere werden im Zuge einer Drehrichtungsermittlung zumindest eines Encoders Maßstabsteilungsfehler-Kenngrößen zu einem Muster zusammengefasst, welches jeweils mit einem Vorwärtsdrehungs-Referenzmuster und einem Rückwärtsdrehungs-Referenzmuster, die aus in der elektronischen Kontrolleinheit gespeicherten Maßstabsteilungsfehler-Kenngrößen direkt oder indirekt gebildet werden, vergleichen wird, wobei jeweils eine Musterübereinstimmungs-Kenngröße des Musters mit zumindest einem Teil eines der beiden Referenzmuster berechnet wird. Hiernach wird aus dem Vergleich der beiden Musterübereinstimmungs-Kenngrößen die Drehrichtung dieses Encoders bestimmt und diese mindestens eine ermittelte Encoder-Drehrichtung wird bei der Bestimmung der Fahrtrichtung des Kraftfahrzeugs berücksichtigt und/oder in die Fahrtrichtungsbestimmt mit einfließen gelassen.

Anlässlich einer Deaktivierung der Zündung des Kraftfahrzeugs wird zumindest der letzte erzeugte Sequenz-Datensatz durch die elektronische Kontrolleinheit abgespeichert, damit dieser bei Aktivierung der Zündung als Information sofort bereitsteht. Insbesondere wird nach Aktivierung der Zündung des Kraftfahrzeugs der letzte gespeicherte Sequenz-Datensatz vom Verfahren verwendet.

Das Kraftfahrzeug weist neben den Raddrehzahlsensoranordnungen ohne Drehrichtungserkennung bevorzugt zusätzlich bzw. alternativ zumindest eine Raddrehzahlsensoranordnung auf, welche eigenständig eine Drehrichtung ihres Encoders und damit im Wesentlichen eine Fahrtrichtung bestimmen kann. Insbesondere ist eine solche Raddrehzahlsensoranordnung einem Rad einer nicht-angetriebenen Achse zugeordnet. Besonders bevorzugt wird die Drehrichtungsinformation dieser Raddrehzahlsensoranordnung zur Erhöhung der Zuverlässigkeit des Verfahrens bei der Berechnung der Fahrtrichtung, als im Wesentlichen redundante Plausibilisierungsinformation, berücksichtigt.

Das Verfahren wird zweckmäßigerweise zur Steigerung der Zuverlässigkeit in Kraftfahrzeugen zusätzlich durchgeführt, welche andere Mittel zur Fahrtrichtungsbestimmung aufweisen, wie insbesondere Raddrehzahlsensoranordnungen zur eigenständigen Drehrichtungserkennung des jeweiligen Encoders.

Die Erfindung bezieht sich auch auf ein Computerprogrammprodukt zur Durchführung aller erfindungsgemäßen Verfahrensschritte.

Das erfindungsgemäße Verfahren ist zur Verwendung für alle Arten von Kraftfahrzeugen, also in sicherheitskritischen Systemen, vorgesehen, welche mindestens eine Raddrehzahlsensoranordnung aufweisen. Darunter fallen bevorzugt Personenkraftwagen, Lastkraftwagen, alle Arten von Anhängern sowie einspurige Kraftfahrzeuge, wie Krafträder. Die Verwendung des vorgeschlagenen Verfahrens ist insbesondere dann sinnvoll, wenn Low-Cost-Raddrehzahlsensoren verwendet werden, welche keine eigenständige Bestimmung einer Drehrichtung durchführen können. Es ist besonders bevorzugt vorgesehen, das erfindungsgemäße Verfahren zur Drehrichtungserkennung für eine elektronische Einparkhilfe zu verwenden.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung

Fig. 1    eine beispielhafte Anordnung aus vier Raddrehzahlsensoranordnungen eines Kraftfahrzeugs, welche die unterschiedlichen Encoderstellungen veranschaulicht,

Fig. 2    ein Diagramm eines Verfahrensbeispiels zur Fahrtrichtungserkennung durch die Auswertung der Drehzahlsignal-Reihenfolge, und

Fig. 3    ein beispielhaftes Diagram eines Verfahrens, welches mehrere Zweige zur gemeinsamen Fahrtrichtungsermittlung aufweist.

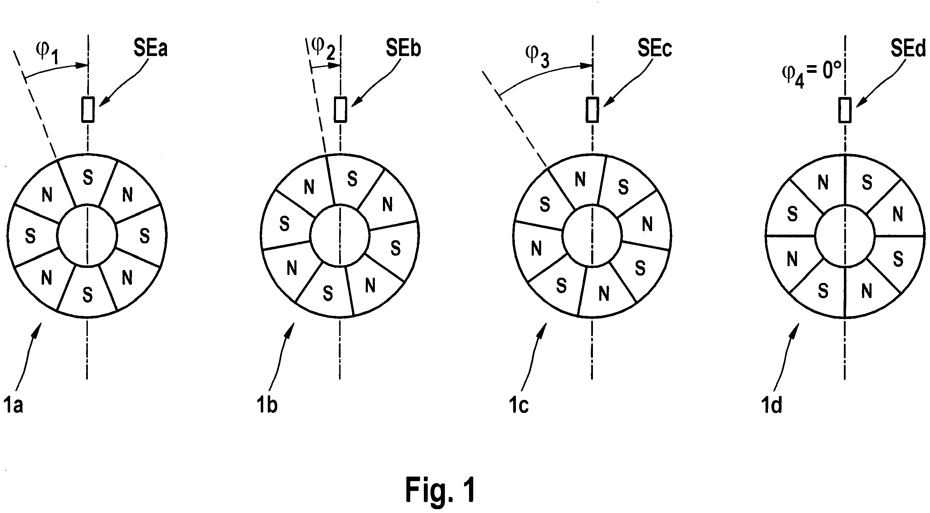

In Fig. 1 sind beispielhaft vier Raddrehzahlsensoranordnungen 1a, 1b, 1c und 1d dargestellt. Diese umfassen jeweils einen alternierend magnetisierten Encoder und einen Raddrehzahlsensor SEa, SEb, SEc, SEd, welcher die Drehbewegungen des Encoders erfasst. Die relative Drehausrichtung ($\varphi_1$, ($\varphi_2$, ($\varphi_3$, $\varphi_4$ zwischen Raddrehzahlsensor SEa, SEb, SEc, SEd und der jeweils nächsten, zu erfassenden Maßstabsteilung ist jeweils pro Raddrehzahlsensoranordnung unterschiedlich. Hierdurch ergibt sich, dass im Zuge einer Fahrtstrecke des Kraftfahrzeugs die einzelnen Raddrehzahlsensoren zu unterschiedlichen Zeitpunkten eine Maßstabsteilung erfassen und dadurch die Drehzahlsignale der einzelnen Raddrehzahlsensoranordnungen zu unterschiedlichen Zeitpunkten erzeugt werden und an die elektronische Kontrolleinheit ECU übertragen werden. Aus der Reihenfolge des Auftretens der Drehzahlsignale bezüglich der einzelnen Raddrehzahlsensoranordnungen ermittelt die ECU die Fahrtrichtung beziehungsweise eine mögliche Fahrtrichtungsänderung.

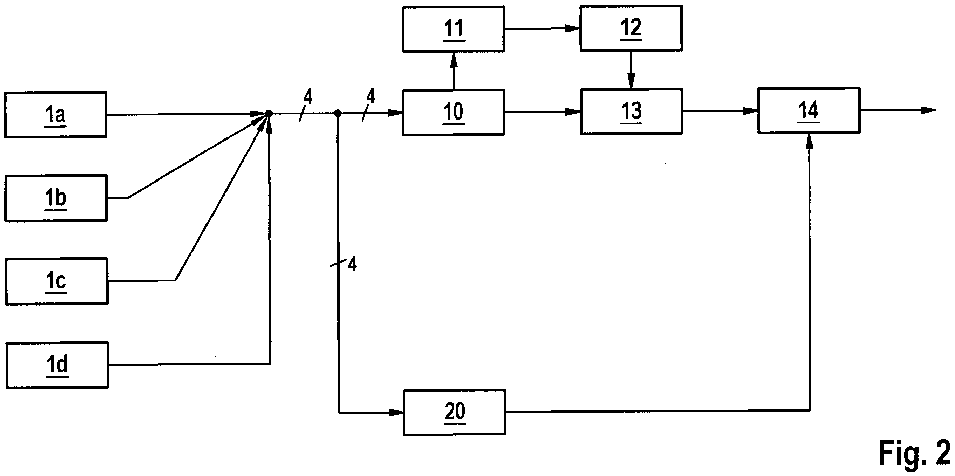

Fig. 2 veranschaulicht ein Verfahrensbeispiel anhand eines Diagramms. Die Drehzahlsignale der Raddrehzahlsensoranordnungen 1a bis 1d werden an die ECU übertragen und dort in Funktionsblock 10 und 20 weiter verarbeitet. In Funktionsblock 10 wird aus der zeitlichen Reihenfolge des Auftretens der Drehzahlsignale der einzelnen Raddrehzahlsensoranordnungen ein Sequenz-Datensatz erzeugt, welcher Zeitstempeldaten umfasst. Funktionsblock 11 umfasst einen gespeicherten Vorgänger-Sequenz-Datensatz sowie die Information über die diesem zugeordnete Fahrtrichtung. Aus diesem Vorgänger-Sequenz-Datensatz werden in Funktionsblock 12 jeweils ein Vorwärts-Sequenz-Datensatz und ein Rückwärts-Sequenz-Datensatz erzeugt. Diese werden in Funktionsblock 13 jeweils mit dem aktuellen Sequenz-Datensatz mittels einer Korrelationsrechnung verglichen, wobei jeweils eine Übereinstimmungs-Kenngröße, beispielgemäß ein Korrelationskoeffizient, berechnet wird. Diese beiden Übereinstimmungs-Kenngrößen werden in Funktionsblock 14 zur Bestimmung der Fahrtrichtung ausgewertet. Bei der Bestimmung der Fahrtrichtung wird dabei ebenfalls das Ergebnis einer Stillstandserkennung des Funktionsblocks 20, in welchen aus den Drehzahlsignalen ein möglicher Fahrzeugstillstand erkannt wird, berücksichtigt. Die Fahrtrichtungserkennung des Funktionsblocks 14 kann als Ergebnis eine erkannte Vorwärts- oder Rückwärtsfahrt oder einen Fahrzeugstillstand oder einen undefinierten Fahrzustand ermitteln.

Der undefinierte Fahrzustand kann aufgrund einer nicht hinreichenden Verifikation eines der drei obig genannten Fahrzustände ermittelt werden.

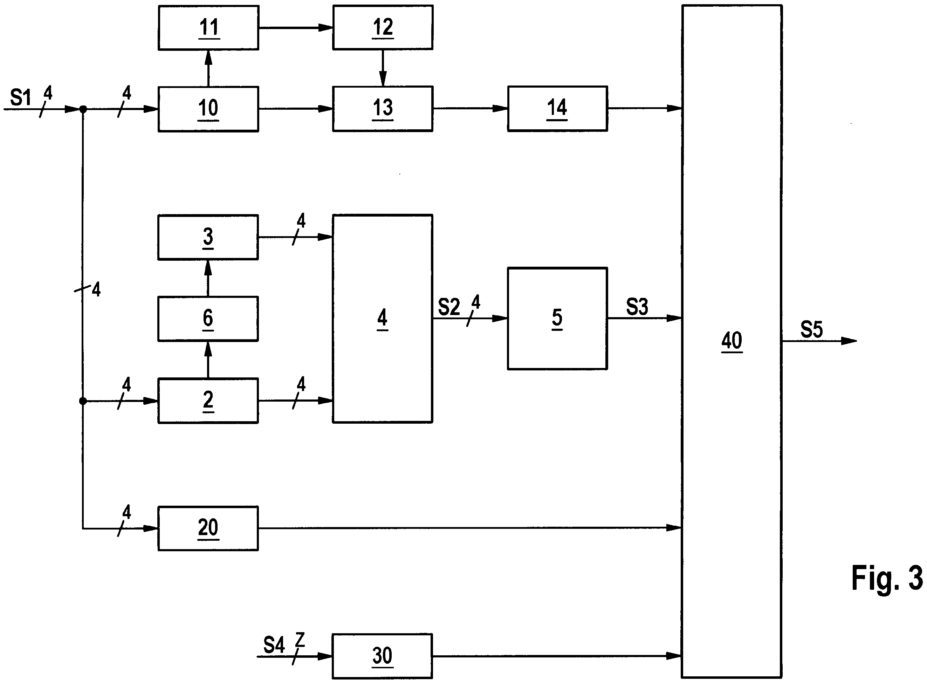

Das in Fig. 3 abgebildete Diagramm stellt ein Verfahrensbeispiel dar, welches ausgehend von Fig. 2 zusätzliche Verfahrenszweige zur Erkennung der Fahrtrichtung des Kraftfahrzeugs aufweist. Im Rahmen des Verfahrensbeispiels wird aus einem Eingangssignal S1, welches inkrementell vier Zählsignale von vier nicht dargestellten Raddrehzahlsensoranordnungen bereitstellt, die Fahrtrichtung des Kraftfahrzeugs S5 berechnet.

S1 wird an Funktionsblock 10 übertragen, der die zeitliche Reihenfolge des Auftretens der Drehzahlsignale bezüglich der einzelnen Raddrehzahlsensoranordnungen, beispielsweise "HR→ VL→ VR→ HL", bestimmt. In Funktionsblock 11 ist die Reihenfolge, beispielsweise beinhaltend die Information "HL→ VR→ VL→ HR", des Auftretens der vorherigen Zählsignale der einzelnen Raddrehzahlsensoranordnungen in einem Speicher hinterlegt. Aus dieser vorherigen Reihenfolge wird in Funktionsblock 12 eine Reihenfolge entsprechend einer Vorwärtsfahrtrichtung "HL→ VR→ VL→ HR" und eine Reihenfolge entsprechend einer Rückwärtsfahrtrichtung "HR→ VL→ VR→ HL" gebildet. Diese beiden Reihenfolgen werden mit der Reihenfolge aus Funktionsblock 11, also der aktuellen Reihenfolge der erfassten Zählsignale, in einem Funktionsblock 13 verglichen. Ausgehend von diesen beiden Vergleichen, wird in Funktionsblock 14 eine Entscheidung betreffend die aktuelle Fahrtrichtung durchgeführt. Diese Entscheidung kann eine erkannte Vorwärts- oder Rückwärtsfahrtrichtung und/oder eine Fahrtrichtungsänderung oder eine undefinierte Erkennung als Ergebnis haben. Dieses Ergebnis der Fahrtrichtungserkennung wird an Funktionsblock 40 übertragen. Aus der erfassten Reihenfolge "HR→ VL→ VR→ HL" und der damit identischen vorherigen Reihenfolge entsprechend einer Rückwärtsfahrtrichtung wird beispielgemäß eine Rückwärtsfahrtrichtung erkannt.

Die Fahrtrichtungserkennung S3 aus Funktionsblock 5, welche im Folgenden ermittelt wird, wird ebenfalls an Funktionsblock 40 übertragen. In Funktionsblock 2 wird aus jedem Drehzahlsignal, welches einer erfassten Maßstabsteilung Raddrehzahlsensoranordnungen zugeordnet ist, eine Maßstabsteilungsfehler-Kenngröße berechnet. Funktionsblock 2 stellt die vier Maßstabsteilungsfehler-Kenngrößen der Drehzahlsignale aller vier Raddrehzahlsensoranordnungen bereit. Diese werden an Funktionsblock 4 übertragen, in welchem für die Maßstabsteilungsfehler-Kenngrößen jedes Encoders inkrementell ein Muster bzw. eine Sequenz aus Maßstabsteilungsfehler-Kenngrößen erzeugt wird. Außerdem ist in Funktionsblock 3 jeweils ein Referenzmuster für jede Raddrehzahlsensoranordnungen hinterlegt, wobei dieses Referenzmuster beispielgemäß jeweils eine Sequenz aus Maßstabsteilungsfehler-Kenngrößen zugeordnet allen Maßstabsteilungen des entsprechenden Encoders in der Reihenfolge eines Vorwärtsdrehbewegung des Encoders umfasst. Diese vier Referenzmuster werden ebenfalls an Funktionsblock 4 übertragen. In Funktionsblock 4 werden die vier Muster jeweils mit dem entsprechenden Referenzmuster der jeweiligen Raddrehzahlsensoranordnungen korreliert und mittels der Berechnung einer Übereinstimmungs-Kenngröße zwischen Muster und Referenzmuster wird der Grad der Übereinstimmung bestimmt. Dabei wird jeweils das Muster mit einem Vorwärtsdrehungs-Referenzmuster und einem in umgekehrter Reihenfolge angeordneten Rückwärtsdrehungs-Referenzmuster verglichen und jeweils eine Übereinstimmungs-Kenngröße berechnet. Im Fall, dass eine der beiden Übereinstimmungskenngrößen um eine definierte Relation größer ist als die andere Übereinstimmungskenngröße und einen definierten Mindestwert charakterisierend den Übereinstimmungsgrad zwischen dem jeweiligen Muster und dem Referenzmuster aufweist, wird die Drehrichtung entsprechend dem Referenzmuster mit der größeren Übereinstimmung mit dem Muster erkannt. Falls keine Drehrichtung erkennbar ist, wird das Muster um eine weitere Maßstabsteilungsfehler-Kenngröße ergänzt und die vorherigen Verfahrensschritte wiederholt. Wenn im Zuge einer gemeinsamen Encoderdrehung für jede Raddrehzahlsensoranordnung bzw. deren Muster eine Drehrichtung in Funktionsblock 4 erkannt wird, werden diese Drehrichtungen S2 an Funktionsblock 5 übertragen, welcher eine Fahrtrichtungserkennung des Kraftfahrzeugs auf Basis einer Majoritätsentscheidung umfasst und die Fahrtrichtungsinformation S3 weiteren Funktionen des Kraftfahrzeugregelungssystems bzw. Systemen des Kraftfahrzeugs zur Verfügung stellt.

Zusätzlich werden im Rahmen des beispielhaften Verfahrens die Maßstabsteilungsfehler-Kenngrößen des Funktionsblocks 2 an eine Nachlerneinheit 6 übertragen, in welcher die vier Maßstabsteilungsfehler-Kenngrößen gefiltert werden, so dass sie nach Übertragung an Funktionsblock 3, in welchem die Referenzmuster bzw. Maßstabsteilungsfehler-Referenzdaten für alle vier Raddrehzahlsensoranordnungen gespeichert sind, mit einer definierten Gewichtung in die Referenzdaten eingehen. Zusätzlich wird mittels der vier Drehzahlsignale S1 in Funktionsblock 20 eine Stillstandserkennung durchgeführt. Die Information bezüglich eines möglichen Fahrzeugstillstands aus Funktionsblock 20 wird auch an Funktionsblock 40 übertragen.

Außerdem umfasst das Verfahrensbeispiel einen Verfahrenszweig mit Funktionsblock 30, in welchem Zusatzinformationen S4, beispielgemäß eine Getriebeinformation, ob ein Vorwärts-oder Rückwärtsgang eingelegt ist und eine Lenkwinkelinformation im Rahmen einer Richtungserkennung ausgewertet werden. Beispielsgemäß zusätzlich, insbesondere im Rahmen eines alternativen Beispiels, wird die Richtungserkennung aus der Gierrate ($\Psi'$) und der Querbe-schleunigung ($a_y$) oder der Gierrate ($\Psi'$) und dem Lenkwinkel ermittelt. Aus folgender Formel kann, insbesondere unter Vernachlässigung des Schwimmwinkels $\beta$ auf die Fahrtrichtung geschlossen werden, indem das Vorzeichen der sich formelgemäß ergebenden Geschwindigkeit ausgewertet wird:

$$v = a_y * (\Psi' + \beta') = a_y * \Psi'$$

Das Ergebnis dieser Richtungserkennung wird zusätzlich an Funktionsblock 40 übertragen.

In Funktionsblock 40 wird eine gemeinsame Auswertung der Fahrtrichtungsinformationen, welche von den Funktionsblöcken 14, 5 und 30 bereitgestellt werden, sowie der Stillstandsinformation aus Block 20 durchgeführt. Dabei wird eine definierte Gewichtung der Informationen vorgenommen. Am Ausgang von Funktionsblock 40 wird Fahrtrichtung S5 zur Verfügung gestellt, wobei diese Information über die Fahrtrichtung eine relativ hohe Zuverlässigkeit und Plausibilität aufweist. S5 wird beispielgemäß zumindest als Eingangssignal für ein Einparkhilfesystem verwendet.

**Patentansprüche**

1. Verfahren zur Fahrtrichtungserkennung oder zur Erkennung eines Fahrtrichtungswechsels eines Kraftfahrzeugs, welches zumindest zwei Raddrehzahlsensoranordnungen (1a, 1b, 1c, 1d) aufweist, die jeweils einen Encoder mit einem inkrementellen Maßstab und mehreren Maßstabsteilungen sowie einen Raddrehzahlsensor (SEa, SEb, SEc, SEd) umfassen und mit einer elektronischen Kontrolleinheit verbunden sind, wobei die Raddrehzahlsensoren bei Erfassung einer Maßstabsteilung jeweils ein Drehzahlsignal an die elektronische Kontrolleinheit übertragen, wobei die Fahrtrichtung oder ein Fahrtrichtungswechsel zumindest aus der Reihenfolge des Auftretens der Drehzahlsignale bezüglich der einzelnen Raddrehzahlsensoranordnungen (1a, 1b, 1c, 1d) ermittelt wird, **dadurch gekennzeichnet, dass** aus einer Information bezüglich der zeitlichen Reihenfolge des aufeinander folgenden Auftretens der Drehzahlsignale der einzelnen Raddrehzahlsensoranordnungen ein Sequenz-Datensatz erzeugt wird (10), wobei im Zuge einer Fahrtrichtungsermittlung folgende Schritte durchgeführt werden:

   - ein aktueller Sequenz-Datensatz wird aus den zuletzt in der elektronischen Kontrolleinheit empfangenen Drehzahlsignalen erzeugt (10),
   - aus wenigstens einem in der elektronischen Kontrolleinheit gespeicherten Vorgänger-Sequenz-Datensatz (11) werden zumindest ein Vorwärts-Sequenz-Datensatz, in dem die Daten entsprechend einer Vorwärtsfahrt angeordnet sind, und mindestens ein Rückwärts-Sequenz-Datensatz, in dem die Daten entsprechend einer Rückwärtsfahrt angeordnet sind, erzeugt (12),
   - wonach der aktuelle Sequenz-Datensatz sowohl mit dem zumindest einen Vorwärts-Sequenz-Datensatz als auch mit dem mindestens einen Rückwärts-Sequenz-Datensatz verglichen wird (13), wobei jeweils eine Übereinstimmungs-Kenngröße des aktuellen Sequenz-Datensatzes mit dem Vorwärts-Sequenz-Datensatz und dem Rückwärts-Sequenz-Datensatz berechnet wird und
   - anschließend eine Fahrtrichtungsbestimmung mittels Auswertung zumindest dieser beiden Übereinstimmungs-Kenngrößen durchgeführt wird (14).

2. Verfahren nach Anspruch 1, **dadurch gekennzeichnet, dass** der Sequenz-Datensatz Zeitstempeldaten umfasst, welche jeweils einem zeitlichen Auftreten eines Drehzahlsignals einer Raddrehzahlsensoranordnung zugeordnet sind.

**3.** Verfahren nach Anspruch 1 oder 2, **dadurch gekennzeichnet, dass** bei der Ermittlung der Fahrtrichtung oder eines Fahrtrichtungswechsels der letzte erzeugte Sequenz-Datensatz mit zumindest einem Vorgänger-Sequenz-Datensatz verglichen wird (13).

**4.** Verfahren nach mindestens einem der Ansprüche 1 bis 3,
**dadurch gekennzeichnet, dass** die Übereinstimmungs-Kenngrößen jeweils mittels einer Korrelationsberechnung zwischen dem aktuellen Sequenz-Datensatz und dem Vorwärts-Sequenz-Datensatz/ Rückwärts-Sequenz-Datensatz berechnet werden.

**5.** Verfahren nach mindestens einem der Ansprüche 1 bis 4, **dadurch gekennzeichnet, dass** der zuletzt erzeugte Sequenz-Datensatz zu definierten Zeitpunkten und/oder ständig in der elektronischen Kontrolleinheit gespeichert wird.

**6.** Verfahren nach mindestens einem der Ansprüche 1 bis 5, **dadurch gekennzeichnet, dass** bei der Bestimmung der Fahrtrichtung wenigstens eine der folgenden Zusatzinformationen berücksichtigt wird (30):

die Fahrzeuggeschwindigkeit, wobei insbesondere die Information, dass eine definierte Mindestgeschwindigkeit vorliegt, zumindest als Indiz für eine Vorwärtsfahrt gewertet wird, eine Getriebeinformation, eine Fahrzeugbeleuchtungsinformation, die Gierrate des Kraftfahrzeugs,
die Querbeschleunigung des Kraftfahrzeugs und/oder eine Lenkwinkelinformation.

**7.** Verfahren nach mindestens einem der Ansprüche 1 bis 6, **dadurch gekennzeichnet, dass** zusätzlich mehreren dieser Maßstabsteilungen des Encoders mindestens einer Raddrehzahlsensoranordnung durch Auswertung der Drehzahlsignale des Sensors in einer elektronischen Kontrolleinheit jeweils eine Maßstabsteilungsfehler-Kenngröße zugeordnet wird (2), wobei aus der Reihenfolge der den erfassten Maßstabsteilungen zugeordneten Maßstabsteilungsfehler-Kenngrößen die Drehrichtung des zumindest einen Encoders ermittelt wird (4), wonach zumindest diese Drehrichtung des einen mindestens einen Encoders bei der Bestimmung der Fahrtrichtung des Kraftfahrzeugs berücksichtigt wird (5, 40).

**8.** Verfahren nach Anspruch 7, **dadurch gekennzeichnet, dass** im Zuge einer Drehrichtungsermittlung zumindest eines Encoders Maßstabsteilungsfehler-Kenngrößen zu einem Muster zusammengefasst werden (2), welches jeweils mit einem Vorwärtsdrehungs-Referenzmuster und einem Rückwärtsdrehungs-Referenzmuster, die aus in der elektronischen Kontrolleinheit gespeicherten Maßstabsteilungsfehler-Kenngrößen direkt oder indirekt gebildet werden (3), verglichen wird (4), wobei jeweils eine Musterübereinstimmungs-Kenngröße des Musters mit zumindest einem Teil eines der beiden Referenzmuster berechnet wird (4), wonach aus dem Vergleich der beiden Musterübereinstimmungs-Kenngrößen die Drehrichtung dieses Encoders bestimmt wird (4) und diese mindestens eine ermittelte Encoder-Drehrichtung bei der Bestimmung der Fahrtrichtung des Kraftfahrzeugs berücksichtigt wird (5, 40) und/oder in die Fahrtrichtungsbestimmung mit einfließt.

**9.** Computerprogrammprodukt zur Durchführung aller Schritte eines Verfahrens gemäß mindestens einem der Ansprüche 1 bis 8.

**Claims**

**1.** Method for detecting the direction of travel or for detecting a change in the direction of travel of a motor vehicle which has at least two wheel speed sensor arrangements (1a, 1b, 1c, 1d) which each comprise an encoder with an incremental scale and a plurality of scale graduations and a wheel speed sensor (SEa, SEb, SEc, SEd) and are connected to an electronic control unit, wherein, when a scale graduation is sensed the wheel speed sensors each transmit a speed signal to the electronic control unit, wherein the direction of travel or a change in the direction of travel is identified at least from the order in which the speed signals occur with respect to the individual wheel speed sensor arrangements (la, 1b, 1c, 1d), **characterized in that** a sequence data record (10) is generated from an information item relating to the chronological order in which the speed signals of the individual wheel speed sensor arrangements successively occur, wherein the following steps are carried out in the course of an identification of a direction of travel:

- a current sequence data record is generated (10) from the speed signals received last in the electronic control unit,

- at least one forward sequence data record, in which the data are arranged in accordance with forward travel, and at least one reverse sequence data record, in which the data are arranged in accordance with reverse travel, are generated (12) from at least one preceding sequence data record (11) which is stored in the electronic control unit,

- after which the current sequence data record is compared (13) both with the at least one forward sequence data record and with the at least one reverse sequence data record, wherein in each case a correspondence characteristic variable of the current sequence data record with the forward sequence data record and the reverse sequence data record is calculated, and

- a process for determining the direction of travel is subsequently carried out (14) by evaluating at least these two correspondence characteristic variables.

2. Method according to Claim 1, **characterized in that** the sequence data record comprises time stamp data which are respectively assigned to a chronological occurrence of a speed signal of a wheel speed sensor arrangement.

3. Method according to Claim 1 or 2, **characterized in that**, when the direction of travel or a change in the direction of travel is identified, the sequence data record generated last is compared (13) with at least one preceding sequence data record.

4. Method according to at least one of Claims 1 to 3, **characterized in that** the correspondence characteristic variables are each calculated by means of a correlation calculation between the current sequence data record and the forward sequence data record/reverse sequence data record.

5. Method according to at least one of Claims 1 to 4, **characterized in that** the sequence data record generated last is stored at defined times and/or continuously in the electronic control unit.

6. Method according to at least one of Claims 1 to 5, **characterized in that**, when the direction of travel is determined, at least one of the following additional information items is taken into account (30):

the velocity of the vehicle, wherein in particular the information that a defined minimum velocity is present is evaluated at least as an indication of forward travel, a transmission information item, a vehicle lighting information item, the yaw rate of the motor vehicle, the lateral acceleration of the motor vehicle and/or a steering angle information item.

7. Method according to at least one of Claims 1 to 6, **characterized in that** in addition in each case a scale graduation error characteristic variable is assigned (2) to a plurality of these scale graduations of the encoder of at least one wheel speed sensor arrangement by evaluating the speed signals of the sensor in an electronic control unit, wherein the direction of rotation of the at least one encoder is identified (4) from the order of the scale graduation error characteristic variables which are assigned to the sensed scale graduations, after which at least this direction of rotation of the one at least one encoder is taken into account (5, 40) in the determination of the direction of travel of the motor vehicle.

8. Method according to Claim 7, **characterized in that**, in the course of an identification of a direction of rotation of at least one encoder, scale graduation error characteristic variables are combined (2) to form a pattern which is respectively compared (4) with a forward rotation reference pattern and a reverse rotation reference pattern, which reference patterns are formed (3) directly or indirectly from scale graduation error characteristic variables which are stored in the electronic control unit, wherein in each case a pattern correspondence characteristic variable of the pattern is calculated (4) with at least a portion of one of the two reference patterns, after which the direction of rotation of this encoder is determined (4) from the comparison of the two pattern correspondence characteristic variables, and this at least one identified encoder direction of rotation is taken into account (5, 40) in the determination of the direction of travel of the motor vehicle and/or is included in the determination of the direction of travel.

9. Computer program product for carrying out all the steps of a method according to at least one of Claims 1 to 8.

**Revendications**

1. Procédé de détection du sens de déplacement ou de détection d'un changement de sens de déplacement d'un véhicule automobile qui présente

au moins deux ensembles (la, 1b, 1c, 1d) de sondes de vitesse de rotation de roue qui comprennent chacune un encodeur doté d'un repère incrémentiel et de plusieurs divisions de repérage ainsi qu'une sonde (SEa, SEb, SEc, SEd) de vitesse de rotation de roue, et qui sont reliées à une unité électronique de contrôle,

les sondes de vitesse de rotation de roue transmettant chacune un signal de vitesse de rotation à l'unité électronique de contrôle lors de la détection d'une division de repérage, le sens de déplacement ou un changement de sens de déplacement étant déterminés au moins à partir de la succession de l'apparition des signaux de vitesse de rotation des différents ensembles (la, 1b, 1c, 1d) de sonde de détection de vitesse de rotation de roue, **caractérisé en ce que** un jeu de données de séquence est formé (10) à partir d'une information qui concerne la succession temporelle de l'apparition des signaux de vitesse de rotation des différents ensembles de sondes de vitesse de rotation de roue, les étapes suivantes étant exécutées au cours d'une détermination du sens de déplacement :

- un jeu actuel de données de séquence est formé (10) à partir des signaux de vitesse de rotation reçus en dernier lieu dans l'unité électronique de commande,
- à partir d'au moins un jeu (11) de données de séquence antérieures conservées en mémoire dans l'unité électronique de commande, au moins un jeu de données de séquence avant dans lequel les données sont disposées en correspondance à un déplacement vers l'avant et au moins un jeu de données de séquence arrière dans lequel les données sont disposées en correspondance à un déplacement en sens arrière sont formés (12),
- suite à quoi le jeu actuel de données de séquence est comparé (13) à la fois au jeu ou aux jeux de données de séquence avant et au jeu et aux jeux de données de séquence arrière, une grandeur caractéristique de correspondance entre le jeu actuel de données de séquence, le jeu de données de séquence avant et le jeu de données de séquence arrière étant calculée et
- une détermination du sens de déplacement est ensuite exécutée (14) par l'intermédiaire de l'évaluation d'au moins ces deux grandeurs caractéristiques de correspondance.

2. Procédé selon la revendication 1, **caractérisé en ce que** le jeu de données de séquence contient des données de repère temporel qui sont chacune associées à une apparition temporelle d'un signal de vitesse de rotation d'un ensemble de sonde de vitesse de rotation de roue.

3. Procédé selon les revendications 1 ou 2, **caractérisé en ce que** lors de la détermination du sens de rotation ou d'un changement de sens de rotation, le jeu de données de séquence formé en dernier lieu est comparé (13) à au moins un jeu précédent de données de séquence.

4. Procédé selon au moins l'une des revendications 1 à 3, **caractérisé en ce que** les grandeurs caractéristiques de correspondance sont toutes calculées au moyen d'un calcul de corrélation entre le jeu actuel de données de séquence et le jeu de données de séquence avant ou le jeu de données de séquence arrière.

5. Procédé selon au moins l'une des revendications 1 à 4, **caractérisé en ce que** le jeu de données de séquence créé en dernier lieu est conservé en mémoire à des instants définis et/ou en permanence dans l'unité électronique de commande.

6. Procédé selon au moins l'une des revendications 1 à 5, **caractérisé en ce que** lors de la détermination du sens de déplacement, au moins l'une des informations supplémentaires ci-dessous est prise en compte (30) :

la vitesse du véhicule et en particulier l'information indiquant qu'une vitesse minimale définie prévaut, une information concernant la transmission, une information concernant l'éclairage du véhicule, la vitesse de lacet du véhicule automobile, l'accélération transversale du véhicule automobile et/ou une information concernant l'angle de braquage sont évaluées au moins comme indice d'un déplacement vers l'avant.

7. Procédé selon au moins l'une des revendications 1 à 6, **caractérisé en ce qu'**en supplément, une grandeur caractéristique d'erreur de division de repérage est associée (2) à plusieurs de ces divisions de repérage de l'encodeur d'au moins un ensemble de sonde de vitesse de rotation de roue, par évaluation des signaux de vitesse de rotation de la sonde dans une unité électronique de commande, le sens de rotation du ou des encodeurs étant déterminé (4) à partir de la succession des grandeurs caractéristiques d'erreur de division de repérage associées aux divisions de repérage saisies, suite à quoi au moins ce sens de rotation du ou des encodeurs est pris en compte (5, 40) dans la détermination du sens de déplacement du véhicule automobile.

8. Procédé selon la revendication 7, **caractérisé en ce qu'**au cours d'une détermination du sens de rotation d'au moins un encodeur, des grandeurs caractéristiques d'erreur de division de repérage sont rassemblées (2) en un motif qui est comparé (4) à un motif de référence de rotation avant et à un motif de référence de rotation arrière qui sont formés (3) directement ou indirectement à partir de grandeurs caractéristiques d'erreur de division de repérage conservées en mémoire dans l'unité électronique de commande, une grandeur caractéristique de correspondance de motif étant calculée (4) avec au moins une partie d'un des deux motifs de référence, suite à quoi le sens de rotation de cet encodeur est déterminé (4) à partir de la comparaison des deux grandeurs caractéristiques de correspondance de motif et ce ou ces sens de rotation d'encodeur ainsi déterminés sont pris en compte (5, 40) dans la détermination du sens de déplacement du véhicule automobile et/ou interviennent dans la détermination du sens de déplacement.

9. Produit de programme informatique destiné à exécuter toutes les étapes d'un procédé selon au moins l'une des revendications 1 à 8.

Fig. 1

Fig. 2

EP 2 171 480 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4038284 A1
- DE 19721488 A1
- DE 4104902 A1
- FR 2893141 A1